# EUROPEAN PATENT SPECIFICATION

(11) **EP 1 392 128 B1**
(45) Date of publication and mention of the grant of the patent: **24.12.2008**
(21) Application number: 02732253.6
(22) Date of filing: 17.05.2002
(51) Int. Cl.: A23L 1/09, C12N 9/26, A23L 1/48

(54) **ENZYME TREATED MAPLE SYRUP, SHELF STABLE, PURE MAPLE BASED PRODUCTS, AND BLENDED PRODUCTS**
ENZYMBEHANDELTER AHORNSIRUP, NUR AUF AHORNSIRUP BASIERENDE, HALTBARE PRODUKTE, UND AHORNSIRUP-MISCHPRODUKTE
SIROP D'ERABLE TRAITE AUX ENZYMES, STABLE A L'ENTREPOSAGE, PRODUITS A BASE D'ERABLE PUR ET PRODUITS MELANGES

(30) Priority: 17.05.2001 US 858602
(43) Date of publication of application: 03.03.2004
(73) Proprietor: Citadelle Cooperative de Producteurs de Sirop d'Erable, Plessisville QC G6L 2Y8 (CA)
(72) Inventor: SWAIN, Robert, Toronto, Ontario M8X 1M7 (CA); JAMPEN, Stephan, Guelph, Ontario N1G 1K1 (CA)
(74) Representative: Viering, Jentschura & Partner
(86) International application number: PCT/CA2002/000720
(87) International publication number: WO 2002/091854

(56) References cited:
- WO-A-00/53024
- WO-A-01/97632
- WO-A-97/36501
- US-A- 4 159 210
- US-A- 4 226 895
- US-A- 5 389 209
- US-A- 5 529 800
- JEFFERY M S: "KEY FUNCTIONAL PROPERTIES OF SUCROSE IN CHOCOLATE AND SUGAR CONFECTIONERY" FOOD TECHNOLOGY, INSTITUTE OF FOOD TECHNOLOGISTS. CHICAGO, US, vol. 47, no. 1, 1993, pages 141-144, XP000338473 ISSN: 0015-6639

## Description

### Field of the Invention

The present invention relates to enzyme treated maple syrup. The enzyme treatment increases the shelf stability of the maple syrup, and other products to which the enzyme treated maple syrup is added, by preventing the visible crystallization or separation of the product. The invention also relates to shelf stable, pure, maple based products, for example (1) shelf stable, pourable, thick maple syrup with a similar viscosity to common table syrup, (2) shelf stable, spreadable maple syrup product with the consistency of clear honey, and (3) shelf stable, spreadable maple butter with the consistency of churned honey. This invention also relates to an enzyme treated maple syrup that when added to products prevents the visible crystallization or separation of the products.

### Background of the Invention

The sap of maple trees forms the basis of maple-based products, including maple syrup, maple sugar and maple confection products. Maple syrup is obtained by the concentration of maple sap, a low solids (low sugar) solution obtained from the maple tree, to a solids content of 66 percent (66 degrees Brix). The production of maple syrup and related products is highly regulated in Canada and the United States, such that all additives are prohibited. As a result, maple producers cannot simply use additives such as stabilizers if they wish to label their product as a "pure maple-based product" or as " pure maple syrup".

To produce maple syrup, the sap from maple tree is concentrated to 66 degrees Brix (at 68 degrees Fahrenheit; 20 degrees Celsius) to be considered as "pure maple syrup" by U.S. and Canadian law. About 40 liters of maple sap are needed to make 1 liter of maple syrup. During the evaporation process, the sap is heated which induces chemical changes that give maple syrup its characteristic color and flavor. These chemical changes include non-enzymatic browning and caramelization reactions (Edson, 1910; Hayward and Pederson, 1946).

Concentration can be achieved through simple boiling in an open kettle or using more advanced evaporation techniques such as vacuum pan evaporators. Various other methods are known for concentrating maple sap. For example, U.S. patent 5,389,209 to Paquette discloses a method of boiling the sap under normal pressure, then heating the sap to below boiling temperature and using an air circulating column to further evaporate the water. Reverse osmosis can be used to pre-concentrate the sap to about 20-25 degrees Brix. An alternate concentration step, which involves the addition of heat, must be used to complete the concentration to 66 degrees Brix such that the characteristic maple flavor is created (North American Maple Producers Manual, Bulletin 856, chapter 7).

Concentrating to a higher level (over 67.5 degrees Brix) will result in crystallization of the sucrose, the main sugar found in maple sap, within the container while in storage. Conversely, a maple syrup of lower Brix (under 64.5 degrees Brix) would spoil (ferment) while in storage. Crystallization occurs because the main sugar in maple syrup is sucrose (90-100 percent), with the rest being glucose (0 to 10 percent) (North American Maple Syrup Producers Manual, Bulletin 856, Appendix 2).

It is the crystallization behavior of maple syrup at a higher concentration that allows for the production of other maple-based products such as maple sugar. These products are obtained by concentrating maple syrup past 66 degrees Brix. At these elevated Brix levels, a supersaturated sucrose solution is made. Therefore, if this solution is cooled, crystallization will occur. Depending on the rate of cooling and/or whether agitation is present during the cooling process, characteristic maple-based products are obtained. Slow cooling without agitation results in crystals that are very large, often termed "rock candy". More rapid cooling, but again without agitation, will result in smaller crystals but the product has a very gritty mouthfeel. When a highly supersaturated maple syrup solution (85 to 90 degrees Brix) is cooled very rapidly without agitation, a non-crystalline glass-like solid is obtained (North American Maple Syrup Producers Manual, Bulletin 856, chapter 9).

Conversely, if a supersaturated (84 to 85 degrees Brix; or 12 to 13 degrees Celsius above the boiling point of water) maple syrup solution is cooled rapidly with highspeed agitation, very small crystals are obtained with the resultant product being paste-like in consistency and being spreadable. This product is known as maple butter or maple cream. Currently there is no pure maple-based product with this paste-like consistency that is shelf stable.

Crystallization of the sugars found in maple syrup is random and occurs spontaneously at higher Brix levels. Because the crystallization behavior of concentrated maple sap is difficult to control, only a select few products have been developed. A common complaint with pure maple syrup is that it is too thin, especially when warmed. These comments are made when pure maple syrup is compared to common table syrups such as *Log Cabin*^{™}, *Mrs. Butterworth's*^{™} and *Aunt Jemima*^{™}. Currently, there is no natural or pure maple syrup which has the viscosity similar to that of common table syrup and that is shelf stable.

Additionally, at a concentration of 66 degrees Brix, maple syrup may be too runny (thin) to be used in an application such as a honey like spread. Currently, there is no natural or pure maple-based product which has the consistency and/or appearance similar to that of clear honey and that is shelf stable.

Clear honey is a transparent high viscosity 3.9 Pascal seconds sugar syrup with a moisture content of 17 to 19 percent (81 to 83 degrees Brix solids) (Rheological Methods in Food Process Engineering, Steffe, J.F. 1996, pp 82, 26 and 367). This material remains in a clear state, without crystallization for extended periods of time. The main sugar components in honey are the monosaccharides glucose and fructose. These sugars are present in maple syrup in small amounts.

As previously described, a more viscous solution similar to that of clear honey, having a unique maple flavor, is attainable by further concentrating maple syrup to a higher Brix level (81 to 82 degrees Brix for example). However, when this supersaturated solution is cooled, crystallization occurs rapidly such that the clear viscous solution is not preserved. This occurs because the main sugar in maple syrup is the disaccharide sucrose, which crystallizes much more readily than glucose and fructose.

Pure glucose and fructose blends are available commercially and are known as invert sugars. It is known to use invert sugar (glucose/fructose) when making artificial maple-based products. It is also known that invert sugar tends to retard crystallization in maple-based products. However, simply adding invert sugar can lead to loss of natural maple flavor. Additionally, the resultant maple-based product may no longer be labeled or considered as pure under the Canadian and U.S. legal standards.

Invert sugars have also been used in making imitation maple syrup or syrup substitutes. U.S. patent 3,878,306 to Garstick discloses an imitation maple syrup made from various sugars and artificial flavorings. U.S. patent 4,938,989 to Steeves and McKelvey provides a maple syrup substitute which contains maple syrup, maple flavor, fructose and glucose and white sugar. Again, these products could not be considered pure maple-based products.

Other products based on maple syrup are disclosed in US 4 226 895 and US 4 159 210.

It is known in the art that sucrose can be cleaved into its constituent sugars, glucose and fructose by use of an acid such as L-tartaric acid (cream of tartar). However, the use of organic acids leads to products that have very poor flavor profiles and unacceptable appearances. A further challenge is that the acid would have to be removed, after it has cleaved the sucrose. This step would also remove important flavor components.

The difficulty in making stable high viscosity maple syrups extends to other maple-based products. For example, maple butter (also called maple cream) separates into two layers if not stored at temperatures below 0 degrees Celsius or 32 degrees Fahrenheit. A dilute syrup layer forms on top and a solid crystalline mass forms underneath. Maple butter is made by heating maple syrup to 11 to 13 degrees Celsius above the boiling point of water (83 to 85 degrees Brix), and cooling rapidly while stirring.

Many viscosity-altering hydrocolloid substances are commonly used in food products, and are known in the art as stabilizing products or 'stabilizers'. Two commonly used stabilizers are carageenan and xanthan. Stabilizers are added to prevent phase separation in liquids or solids such as ice cream and peanut butter. However, these stabilizers have not been used to date in maple-based products. Carrageenan is extracted from seaweed while xanthan is derived from an industrial fermentation of a bacteria.

Accordingly, there is a need for pure maple-based products that are shelf stable, and that can extend the scope of the use of maple syrup and related products. There is a need for enzyme treated maple syrup. The enzyme treatment increases the shelf stability of the maple syrup, and products to which the enzyme treated maple syrup is added. There is also a need for shelf stable, pure maple based products, for example, (1) there is a need for a shelf stable, pourable, thick maple syrup with the viscosity of common table syrup, (2) there is a need for a shelf stable, spreadable, non-crystalline maple syrup product with the consistency of clear honey and, (3) there is also a need for a shelf stable, spreadable maple butter with the consistency of churned honey.

Further, there is a need for an enzyme treated maple syrup that when added to products prevents the visible crystallization or separation of the products.

### Summary of the Invention

As uses herein, the term maple syrup refers to concentrated or unconcentrated sap of the botanical genus *Acer*. It is in the scope of this invention that the unconcentrated maple sap may be used directly.

The main aspect of the present invention is the enzyme treatment of maple syrup. The enzyme treatment cleaves the main sugar in maple syrup (sucrose) to yield glucose and fructose. Products containing a high concentration of sucrose are not shelf stable and will crystallize, whereas products containing a similarly high concentration of the combination of glucose and fructose, and proportionally less sucrose, will not crystallize or separate as readily.

The present invention provides methods for the enzymatic treatment of maple syrup, and products produced thereof. For example, the invention provides: (1) an enzyme treated maple syrup product which is a pure maple syrup product, which when added to other products prevents visible crystallization and separation of the products, (2) a shelf stable, thick, pourable maple syrup with the viscosity of common table syrup, (3) a shelf stable, spreadable, non-crystalline maple syrup product with a consistency similar to that of clear honey, wherein the product is preferably transparent or translucent, (4) a shelf stable maple-based product with high Brix value, for example, shelf stable maple butter with a similar consistency to churned honey.

The following aspect relates to the general method of enzyme treating maple syrup.

According to one object of the present invention, there is provide a method of producing an enzyme treated maple syrup, comprising: (a) adding a sucrose-cleaving enzyme to a maple syrup; and (b) incubating the maple syrup to produce the enzyme treated maple syrup. Optionally, the method further comprises the step of concentrating the enzyme treated maple syrup. Optionally, the method further comprises the step of removing or inactivating the sucrose-cleaving enzyme. Optionally, the sucrose-cleaving enzyme is invertase. Further, the maple syrup may be diluted to about 55 to 66 degrees Brix prior to the step of adding a sucrose-cleaving enzyme. The invention also provides the enzyme treated maple syrup produced by this method.

The following aspects relate to the shelf stable, thick, pourable, pure maple syrup with the viscosity of common table syrup.

According to another object of the present invention, there is provided a method for producing a shelf stable, thick, pourable, pure maple syrup product with a viscosity of common table syrup, comprising: a) adding a sucrose-cleaving enzyme to a maple syrup; b) incubating the maple syrup to produce an enzyme treated maple syrup; c) adding an untreated maple syrup to the enzyme treated maple syrup at a predetermined ratio of enzyme treated maple syrup to untreated maple syrup, to produce a maple syrup blend of untreated maple syrup and enzyme treated maple syrup; and d) concentrating the maple syrup blend to produce the shelf stable, thick and pure maple syrup product with the viscosity of common table syrup. Optionally, the ratio of enzyme treated maple syrup to untreated maple syrup is from about 30:70 to 60:40 by percentage of sugars present, and preferably about 40:60. Optionally the maple syrup product is concentrated to between about 72 and 76 degrees Brix. The invention also provides the shelf stable, thick pourable, pure maple syrup product made by this method.

According to another object of the present invention, there is provided a method for producing a shelf stable, thick, pourable, pure maple syrup product with a viscosity of common table syrup, comprising: a) adding a sucrose-cleaving enzyme to a maple syrup; b) incubating the maple syrup to produce an enzyme treated maple syrup; c) concentrating the enzyme treated maple syrup; and d) adding an untreated maple syrup to the concentrated enzyme treated maple syrup at a predetermined ratio of enzyme treated maple syrup to untreated maple syrup, to produce a maple syrup blend of untreated maple syrup and enzyme treated maple syrup, wherein the maple syrup blend is the shelf stable, thick, pourable and pure maple syrup product with the viscosity of common table syrup. Optionally, the ratio of enzyme treated maple syrup to untreated maple syrup is from about 30:70 to 60:40 by percentage of sugars present, and preferably about 40:60. Optionally, the enzyme-treated maple syrup is between about 84 and 89 degrees Brix, and the maple syrup product has a final concentration of between about 72 and 76 degrees Brix. The invention also provides the thick, shelf stable maple syrup made by this method.

According to another object of the present invention, there is provided a method for producing a shelf stable, thick, pourable, pure maple syrup product with a viscosity of common table syrup, comprising: a) adding a sucrose-cleaving enzyme to a maple syrup; b) incubating the maple syrup to produce an enzyme treated maple syrup; c) inactivating or removing the sucrose-cleaving enzyme; and d) concentrating the enzyme treated maple syrup to produce the shelf stable, thick pourable and pure maple syrup product with the viscosity of common table syrup. Optionally, the maple syrup product is concentrated to between about 72 and 76 degrees Brix. The invention also provides the thick maple syrup made by this method.

Optionally, the method to produce shelf stable, thick, pourable, pure maple syrup with the viscosity of common table syrup utilizes invertase. Optionally, the method comprises the additional step of diluting the maple syrup to about 55 to 66 degrees Brix prior to the step of adding the sucrose-cleaving enzyme. Optionally, the sucrose-cleaving enzyme is removed by filtration or inactivated by heat treatment. However, due to requirements of various regulatory agencies, it may be necessary to remove the enzyme in order to meet applicable regulatory standards for pure maple syrup. Optionally, the method includes an additional step monitoring the ratio of sucrose to fructose and glucose, and removing or inactivating the sucrose-cleaving enzyme at a predetermined sucrose to fructose and glucose ratio, followed by the step of concentrating. Optionally, the viscosity of the maple syrup product is between about 1200 and 2100 centipoise at 2.5 rpm as determined by a Brockfield Viscometer at 22°C, and preferably between about 1300 and 1900 centipoise.

According to another aspect of the invention, there is provided a shelf stable, thick, pourable and pure maple syrup product having a Brix measurement of between about 70 and about 76 degrees and a viscosity of between about 1200 and 2100 centipoise (and preferably between 1300 and 1900) at 2.5 rpm as determined by a Brockfield Viscometer at 22°C.

According to another aspect of the present invention, there is provided the use of the shelf stable, thick, pourable, pure maple syrup as a topping, sweetener or ingredient in a food.

The following aspects relate to the shelf stable maple-based product with the consistency of clear honey.

According to another aspect of the present invention there is provided a method for producing a shelf stable, spreadable maple syrup product with a consistency of clear honey, comprising: a) adding a sucrose-cleaving enzyme to a maple syrup; b) incubating the maple syrup to produce an enzyme treated maple syrup; c) adding an untreated maple syrup to the enzyme treated maple syrup at a predetermined ratio of enzyme treated maple syrup to untreated maple syrup, to produce a maple syrup blend of untreated maple syrup and enzyme treated maple syrup; and d) concentrating the maple syrup blend to produce the shelf stable, spreadable maple syrup product with the consistency of clear honey. Optionally, the ratio of enzyme treated maple syrup to untreated maple syrup is from about 45:55 to 60:40 by percentage of sugars present, preferably about 55:45 by percentage of sugars present. Optionally, the maple syrup product has a final concentration of between about 79 and 83 degrees Brix. There is also provided a shelf stable, spreadable maple syrup product with the consistency of clear honey made by this method.

According to another aspect, there is provided a method for producing a shelf stable, spreadable maple syrup product with the consistency of clear honey, comprising: a) adding a sucrose-cleaving enzyme to a maple syrup; b) incubating the maple syrup to produce an enzyme treated maple syrup; c) inactivating or removing the sucrose-cleaving enzyme; and d) concentrating the enzyme treated maple syrup to produce the shelf stable, spreadable maple syrup product with the consistency of clear honey. Optionally, the maple syrup product has a final concentration of between about 79 and 83 degrees Brix. There is also provided a shelf stable, spreadable maple syrup product with the consistency of clear honey made by this method.

Optionally, the sucrose-cleaving enzyme is invertase. Optionally, the method comprises the additional step of diluting the maple syrup to about 55 to 66 degrees Brix prior to the step of adding the sucrose-cleaving enzyme. Further, the sucrose-cleaving enzyme can be removed by filtration or inactivated by heat treatment. Due to requirements of various regulatory agencies, it may be necessary to remove the enzyme in order to meet applicable regulatory standards for pure maple-based products. In addition, the method may comprises the additional step of monitoring the ratio of sucrose to fructose and glucose, and removing or inactivating the sucrose-cleaving enzyme at a predetermined sucrose to fructose and glucose ratio, followed by the step of concentrating.

There is also provided a shelf stable, spreadable maple syrup product with the consistency of clear honey having a Brix measurement of between about 72 and 90 degrees, preferably between 79 and 83 degrees.

According to another aspect of the present invention, there is provided the use of the shelf stable, spreadable maple syrup product with the consistency of clear honey as a topping, sweetener or ingredient in a food.

The following aspects relate to shelf stable maple butter.

Another object of the invention is to provide a method or producing shelf stable maple butter which comprises, (1) combining maple syrup with an enzyme treated maple syrup, or one or more stabilizers, or a combination of both to form a maple syrup solution, and (2) concentrating the maple syrup solution. The stabilizer can be any or all of one or more viscosity altering hydrocolloids. Optionally, air or an inert gas, for example nitrogen, can be added after concentrating the solution. Optionally, the viscosity altering hydrocolloid is xanthan or carageenan or both, at a concentration of about 0.1 to 1 percent. Optionally the ratio of pure maple-based product stabilizer to maple syrup is 20:80 to 25:75 by percentage of sugars present. Optionally the resulting maple butter is concentrated to between 83 degrees Brix and 87 degrees Brix.

Another object of the present invention is to provide a method of producing a shelf stable maple butter, comprising: (a) adding a sucrose-cleaving enzyme to a maple syrup; (b) incubating the maple syrup to.produce an enzyme treated maple syrup; (c) inactivating or removing the sucrose cleaving enzyme; and (d) concentrating the enzyme treated maple syrup to produce the shelf stable maple butter. Optionally, the sucrose-cleaving enzyme is invertase. Optionally, the maple syrup is diluted to about 55 to 66 degrees Brix prior to the step of adding the sucrose cleaving enzyme. The sucrose-cleaving enzyme may be removed by filtration or inactivated by heat treatment. Due to requirements of various regulatory agencies, it may be necessary to remove the enzyme in order to meet applicable regulatory standards for pure maple-based products. Further, the method may comprise the additional step of monitoring the ratio of sucrose to fructose and glucose, and removing or inactivating the sucrose cleaving enzyme at a predetermined sucrose to fructose and glucose ratio, followed by the step of concentrating. Also provided is the maple butter produced by this method.

Another object of the invention is to provide a shelf stable maple butter with the consistency of churned honey. Another object is to provide a stabilized maple butter, which is shelf stable, can be a pure maple-based product.

The following aspects relate to improving the flavor.

Another object of the invention is to provide a method of making a maple-based product with improved flavor, for example maple butter, comprising (1) concentrating maple syrup, and (2) adding air or an inert gas, for example nitrogen, after concentrating. Optionally, air can be added during the cooling step. Optionally, the air or the inert gas is added to a final concentration of 1% to 15%, most preferably to a final concentration of 12 percent.

Another object of the invention is to provide the improved flavor maple-based product.

The following aspects relate to enzyme treated maple syrup that when added to products, prevents the visible crystallization or separation of the product.

Another object of the present invention is to provide a method of producing an enzyme treated maple syrup, that when added to a maple based product functions to prevent the visible crystallization or separation of the maple based product, comprising (1) adding a sucrose-cleaving enzyme, for example, invertase, to maple syrup and (2) incubating the maple syrup to produce the enzyme treated maple syrup. Optionally, the method could include the further steps of concentrating the enzyme treated maple syrup and removing the sucrose-cleaving enzyme post-incubation. The method could also include the optional step of diluting the maple syrup to between about 55-66 degrees Brix prior to the addition of the sucrose-cleaving enzyme.

Another object of the present invention is to provide an enzyme treated maple syrup that is a pure maple-based product, and that when added to a maple based product functions to prevent the visible crystallization and separation of the maple based product.

Another object of the present invention is to provide a blended product comprising an enzyme treated maple syrup and a second product. Also the invention provides an enzyme treated maple syrup that when added to a maple based product prevents the crystallization and separation of the maple based product. Also provided is a blended product comprising a maple-based product and an enzyme treated maple syrup.

According to a further object of the invention there is provided a method of using a stabilized maple-based product as a spread, sweetener, or a topping, or on its own as a snack food product.

Another object of the invention is to provide a method for stabilizing a maple-based product comprising, (1) combining maple syrup with an enzyme treated maple syrup, or one or more stabilizers, or a combination of both to form a maple syrup solution, and (2) optionally, concentrating the maple syrup solution. The stabilizer can be any or all of one or more viscosity altering hydrocolloids. Optionally, air or an inert gas, for example nitrogen, can be added after concentrating the solution. In another object, a method is provided to stabilize a product by combining the product with an enzyme treated maple syrup.

Another object of the invention is to provide a shelf stable maple-based product and a stabilized maple-based product.

According to a further object of the invention there is provided a method of using a stabilized maple-based product as an ingredient in the manufacture of a pure maple-based product.

### Detailed Description of the Drawings

Figure 1 is a graph showing the viscosity profile of a 55:45 enzyme treated to non-enzyme treated blend of maple syrup at various concentrations at 25°C.

Figure 2 is a graph showing the viscosity profile of a 55:45 enzyme treated to non-treated blend of maple syrup at various concentrations at 40°C.

### Detailed Description of the Invention

The present invention provides an enzyme treated maple syrup that increases the shelf stability of the maple syrup. The enzyme treatment increases the shelf stability of other maple-based products to which the enzyme treated maple syrup is added, by preventing the visible crystallization or separation of the product. The enzyme treatment cleaves the main sugar in maple syrup (sucrose) to yield glucose and fructose. Products containing a high concentration of sucrose are not shelf stable and will crystallize or separate, whereas products containing a similarly high concentration of the combination of glucose and fructose, with proportionally lower sucrose, will not crystallize or separate as readily. Therefore, the enzyme treatment provides shelf stable, pure maple based products.

The present invention provides a shelf stable, thick, pourable, pure maple syrup which has the flow properties similar to that of common table syrup. The pure maple syrup of the present invention is thicker than the pure maple syrup of the current state-of-the-art.

Therefore, the thick, pure maple syrup of the present invention is less runny, especially when warm.

The present invention also provides a spreadable maple syrup product which is shelf stable, having a consistency similar to that of clear honey. The maple syrup product may be used in a similar manner as honey: as a spread on bread products, topping for other food products such as ice cream or other desserts, or as a sweetener in home cooking and/or in commercial food products. It is also suitable for use in pure maple-based products.

The present invention also provides a shelf stable maple butter which is spreadable and has a similar consistency to churned honey. The maple butter may be used: as a spread on bread products, topping for other food products such as waffles, pancakes, ice cream or other desserts, or as a sweetener in home cooking and/or in commercial food products, for example, filling for chocolates and other confections.

The present invention also provides an enzyme treated maple syrup that when added to a product increases the shelf stability of the product by preventing the visible crystallization or separation of the product. The product can be a maple syrup product or other product, for example, fondants, fudge and other crystalline candy. This enzyme treated maple syrup has the advantage of being a pure maple-based product.

There are several advantages to the present invention: (1) the invention provides for maple-based products with a high Brix value that are shelf stable, (2) the products are pure maple-based products, and are labeled as "pure"; (3) the products taste like maple based products, (4) the method to produce the products is easy and relatively inexpensive and (5) the enzyme treated maple syrup can be added to other products, to increase the shelf stability of other products.

### Definitions

"About" when used herein in relation to Brix measurement means ± 2 units of measure, when used in relation to % sugar concentration, % air, % viscosity or % stabilizer means ± 20%, when used in relation to % enzyme treated maple syrup, % maple syrup, % untreated maple syrup, ratio of enzyme treated maple syrup to untreated maple syrup and % stabilizer means ± 10 %.

"Brix" when used herein means the refractometric sucrose value determined in accordance with the 'International Scale of Refractive Indices of Sucrose Solutions' and to which the applicable corrections for temperature and other solids have been made. The Brix value would be determined in accordance with the refractometric method outlined in the 'Official Methods of Analysis of the Association of Analytical Chemists'. In the case of maple syrup, the Brix value, as measured by refractometer or hydrometer, essentially equals the amount of sugar present because most (about 98 %) of the solids are sugars.

"Crystallization" when used to describe the shelf stable, spreadable maple syrup product with the consistency of clear honey and the shelf stable, thick pourable maple syrup with the viscosity of common table syrup means crystals that are visible.

"Enzyme treated maple syrup" when used herein means a maple syrup that has been treated with a sucrose cleaving-enzyme.

"Maple-based product" when used herein means a product that contains maple syrup or maple sap.

"Maple butter" when used herein means the creamy smooth textured product obtained by the rapid cooling of a supersaturated maple syrup solution.under high amounts of agitation. Maple butter is also known as maple cream. It is a crystallized product wherein the crystals are not visible without the use of magnification.

"Maple syrup" when used herein means the concentrated or unconcentrated sap of trees of the botanical genus *Acer*.

"Pourable" when used herein means having a viscosity such that the product flows from a vessel, similar to the viscosity of common table syrup.

"Pure maple-based product" when used herein means a maple-based product that contains only maple syrup, enzyme treated maple syrup or a combination of enzyme treated maple syrup and untreated maple syrup.

"Separation" when used to describe the maple butter means the formation of two or more distinct layers within the product.

"Shelf stable" when used herein in reference to the thick, pourable maple syrup with the viscosity of common table syrup and maple syrup product with the consistency of clear honey means that the maple syrup product is substantially free from crystallization for a period of at least 3 months. "Shelf stable" when used herein in reference to a maple butter product means that the maple butter is substantially free from separation for a period of at least 1 month.

"Spreadable" when used herein means distributable over a surface, in a manner similar to clear honey or churned honey.

"Stabilizer" when used herein means a substance that when added to a food product, inhibits crystallization, or prevents phase separation, or both.

A "sucrose-cleaving enzyme" when used herein is a hydrolysis enzyme which preferentially cleaves the beta-D-fructofuranoside linkage between the glucose and fructose molecules that make up sucrose.

"Untreated maple syrup" when used herein is maple syrup that has not been treated with a sucrose cleaving enzyme.

"Visible" when used herein means visible to the naked eye, without the use of magnification.

To make the high viscosity maple syrup of the present invention, any grade of maple syrup may be used as the starting material. Preferably, the maple syrup is high grade. The maple syrup is placed in a sanitary vessel such as a sterile agitated incubation tank and may optionally be diluted in order to optimize reaction conditions. Preferably, the maple syrup is diluted using sterile deionized water to a final Brix content of between about 55-66 degrees Brix. Alternatively, maple sap which has been concentrated to about a final Brix content of between about 55 and 66 degrees Brix may be used in place of maple syrup.

An enzyme which cleaves sucrose into glucose and fructose is added to the maple syrup. Preferably an invertase enzyme is used. There are two main groups of invertase enzymes: 1) alpha-glucosidases which are also known as maltase, glucoinvertase, glucosidosucrase, maltase-glucoamylase, lysosomal alpha glucosidase, and acid maltase and 2) beta fructofuranosidases which are also known as invertase, saccharase and beta-fructosidase. Invertase is available commercially from Sigma Chemicals (Grade V: Practical from baker's yeast) and is used in the baking industry to control the amount of surface browning in bread and cookies. Invertase is added in the amount of 0.05 % of the final weight of the diluted mixture. Invertase is sucrose specific and self-terminating in that once all of the substrate sucrose is cleaved, nothing else will be hydrolyzed.

The solution may be adjusted to the optimal pH for invertase (pH 4.6) through known pH adjustment methods. Preferably, to maximize the natural maple flavor, the pH is not adjusted. The reaction still proceeds at the natural pH of maple syrup (pH 6.8), but the time necessary to complete the hydrolysis of sucrose to glucose and fructose increases when the pH is not adjusted. At pH 6.8, conversion takes approximately 7 days.

The incubation temperature is preferably between 15 and 35 degrees Celsius and most preferably, the incubation should take place at room temperature (20-23 degrees Celsius) under continuous gentle agitation. Because of the low Brix, sanitary practices should be used when sampling and in further processing due to the potential for microbial growth.

The cleavage of sucrose to glucose and fructose can be monitored using various known methods. The preferred method is monitoring the optical rotation of the sugars. As the hydrolysis progresses, the muta-rotation decreases, and is negative when complete. A second method encompasses monitoring the hydrolysis using HPLC techniques methods (AOAC Official Method 977.20, Separation of Sugars in Honey). Glucose, fructose and sucrose can be separated by a carbohydrate column (Waters Inc., carbohydrate analysis column, part no. 84038) using a mobile phase of 83:17 acetonitrile: water. With corresponding standards, the three sugars can be identified and quantified. Hydrolysis is deemed complete after negligible amounts of sucrose are detectable.

Once the reaction is complete, preferably, the invertase enzyme can be removed or inactivated from the mixture. The advantages of removing the enzyme from the syrup are to remove the visible haze and to remove the protein source which could initiate the Maillard browning reaction upon heating in the evaporation step. The Maillard reaction potentially creates bitter flavors, which would be objectionable in this product.

The enzyme can be removed by known means, including precipitation, hydrolysis and filtration or can be inactivated by known means such as heating (> 90 degrees Celsius). Preferably, the invertase is removed by filtration through a filter of pore size of less than 1µm.

It is also within the scope of this invention that the enzyme be immobilized onto a resin bead that is then placed into a reaction column. The maple syrup is flushed through the column on a continuous basis, allowing the reaction to occur as the maple syrup passes over the resin beads onto which the enzyme had been attached. In such a case, the enzyme does not have to be removed through alternate means such as filtration as it remains bound to the resin beads in the column.

Once the enzyme is removed or inactivated, the syrup can be concentrated to any concentration, depending on the viscosity or consistency that is desired in the product. It is preferably concentrated to between 72 and 90 degrees Brix, depending on the final product. For example, it is concentrated to (1) between 72 and 76 degrees Brix for the thick, pourable maple syrup product that has a viscosity of common table syrup, (2) between 79 and 83 degrees Brix for the spreadable maple syrup product which has the consistency of clear honey, and (3) between about 83 and 86 degrees Brix for the spreadable maple butter product with a consistency of churned butter. It is within the scope of the invention that other products can be made by this method. The maple butter product can also be blended with untreated maple syrup for the spreadable maple butter with a consistency of churned honey. The concentration may be accomplished using known methods such as heating in an open kettle and vacuum pan evaporators. Concentration of the syrup is most preferably accomplished by heating the syrup to high temperature for short periods of time and flashing off the appropriate quantities of water to reach the desired Brix level. Low temperatures for longer periods of time with vacuum can also be used. Low temperature long time concentration is best carried out between 50 and 80 degrees Celsius, more preferably from 50 to 65 degrees Celsius and most preferably at 65 degrees Celsius and under vacuum (about 0.8 bar). The high viscosity maple syrup product produced in this manner may then be used by a consumer after the usual packaging steps, or it may be packaged and provided to the consumer. The maple syrup products can be used by pouring the product over foods, as a sweetener or topping by adding the product to foods and as an ingredient in pure maple based products. The enzyme-treated maple syrup product can also be used to increase the shelf life of products, by preventing the visible crystallization or separation of the product when added to it.

To further improve the flavor profile, the dilute enzyme treated syrup is preferably blended with maple syrup of any grade prior to concentration. Optimum blends are 30:70, 40:60, 50:50, 55:45 and 60:40 (enzyme treated to non-enzyme treated syrup).

The blended syrup can then be concentrated as described above. Alternatively, the enzyme treated maple syrup can concentrated prior to blending with untreated maple syrup. The maple flavor profile can be tailored to suit the retail climate by using different grades of maple syrup with varying flavor profiles in the incubation step and the blending step. The color of the final product can be controlled in a similar manner.

To make the shelf stable maple-based product of the present invention, for example maple butter, any grade of maple syrup may be used as the starting material. Preferably, the maple syrup is high grade. The maple syrup is combined with either (1) a small quantity of viscosity altering hydrocolloid stabilizer, preferably 0.1% carageenan or 0.1% xanthan, which has been first dispersed in a small quantity of water, or (2) an enzyme treated maple syrup, preferably in a blend ratio of 20 to 25% enzyme treated maple syrup to 75 to 80% untreated maple syrup, or (3) one or more viscosity altering hydrocolloid stabilizers and enzyme treated maple syrup. The enzyme treated maple syrup is produced by adding enzyme to maple syrup and incubating the maple syrup.

The resultant blend is then concentrated, preferably to a concentration of between 83 and 87 degrees Brix, and most preferably to a concentration of 86 degrees Brix. This concentration may be accomplished using known methods such as heating in an open kettle and vacuum pan evaporation. Concentration of the resultant blend is most preferably accomplished by heating the syrup to high temperature for short periods of time in a plate heat exchanger, followed by flashing off the appropriate amounts of water to obtain the desired Brix content. Low temperatures for longer periods of time with vacuum can also be used. The hot concentrated product is then transferred to a scraped surface heat exchanger where it is cooled rapidly under high amounts of agitation. The maple butter produced in this manner may then be provided to the consumer. The maple butter flavor profile can be tailored to suit the retail climate by using different grades of maple syrup with varying flavor profiles in the blending step. The color of the final product can be controlled in a similar manner.

To further improve the flavor profile of the maple-based product, for example, maple butter, air or an inert gas (for example nitrogen) can be whipped, for example, into the 84 degree Brix concentrated blend of maple syrup, enzyme treated maple syrup and hydrocolloid stabilizer, while cooling under high or rapid agitation. Preferably, a blend of pure maple syrup and enzyme treated maple syrup with a sugar ratio of 25 to 75 (pure maple syrup:enzyme treated maple syrup) is concentrated to 84 degrees Brix. Optionally, 0.15 xanthan can be added to the blend prior to concentration. After concentration, and during cooling, air can be whipped into the product to a final concentration of 1% to 15%, preferably between 9% to 12% air, most preferably to a final concentration of 12% air.

The present invention is described in more detail by reference to the following specific examples, which are not to be construed as limiting.

### Example 1: Addition of Invert Sugar to Maple Syrup (not according to the invention)

The first stabilization technique evaluated was simple addition of invert sugar (glucose and fructose) to maple syrup and then concentrating to 82 degrees Brix on a hot plate. Four different levels of invert sugar were added: 1, 6, 10, and 20 percent. Crystallization was evident in all samples within three weeks of storage at room temperature. Interestingly, the more invert sugar added, the longer the time before crystallization was evident. However, with increasing invert sugar content, the maple flavor decreased substantially. The type of invert sugars was also evaluated. Three different invert sugars, solid invert, medium invert and high fructose corn syrup, were added at 20 percent of the total volume to 66 degrees Brix maple syrup and concentrated to 80 to 82 degrees Brix. Crystallization appeared in each of the samples within about three weeks.

### Example 2: Addition of Cream of Tartar to Maple Syrup (not according to the invention)

Cream of tartar (L-Tartaric Acid, Sigma Chemicals, Oakville, ON, Canada.) is an accepted way of converting sucrose to glucose and fructose (North American Maple Producers Manual s.7). Three levels of tartaric acid were evaluated: 0.02, 0.08 and 0.10 percent. Tartaric acid was added to the 66 degrees Brix maple syrup. The solution was heated to boiling, as it was thought that the heat added in concentrating the syrup to 80-82 degrees Brix would be sufficient to cleave a portion of the sucrose to glucose and fructose. However, the resultant samples were very bitter in taste and had a distinct hazy appearance. All samples also crystallized after a two-day period at room temperature.

### Example 3: Enzymatic Cleavage of Sucrose to Glucose and Fructose with pH Adjustment

The enzyme invertase (Sigma Chemicals, Oakville ON, Canada) was used to cleave sucrose to glucose and fructose. The optimal pH for this specific invertase enzyme is 4.5. However, the natural pH of maple syrup is 6.8. In the first trial, 1 kg of maple syrup was placed in a sterile container. The pH of the maple syrup was adjusted to 5.0 using tartaric acid, closer to the optimal pH of the enzyme. To this, enzyme was added (1 g enzyme per 500 g syrup). In order to assist in the dispersion of the enzyme, the maple syrup was diluted to 55 degrees Brix using sterile deionized water. The solution was divided into two portions with one portion incubated at room temperature (22 to 23 degrees Celsius) and the other portion incubated at 33 degrees Celsius. After a 6 day incubation period the sucrose, glucose and fructose content was determined using HPLC methods (AOAC Official Method 977.20, Separation of Sugars in Honey). At both temperatures, all of the sucrose had been converted to glucose and fructose. A filtration step was then carried out to remove the enzyme (Whatman No. 42, Slow, Fine Crystalline Material; Fisher Canada, Napean, ON, Canada). The syrup was placed in a beaker atop a hot plate and heated to boiling. Concentration of this syrup to 82 Brix resulted in a product that was substantially free of crystals, and was shelf stable at room temperature for at least 2 months.

### Example 4: Enzymatic Cleavage of Sucrose to Glucose and Fructose without pH Adjustment

In an effort to reduce the effect of pH adjustment on the flavor of the product, the activity of the enzyme invertase was evaluated in maple syrup at the normal pH of maple syrup (pH 6.8) as described in Example 3. The incubation was carried out at room temperature, and allowed to proceed for 11 days. HPLC analysis of the sample showed that all of the sucrose had been converted to glucose and fructose. After filtration and concentrating to 82 degrees Brix, the resultant syrup had improved flavor and clarity. However, a more intense maple flavor may be desired. The flavor can be improved by using a more continuous evaporation/concentration system such as a plate heat exchanger with a flash system.

### Example 5: Flavor Improvements by Blending

To increase the maple flavor profile of the maple syrup at higher Brix, treated syrup (as described in Example 4) was blended with untreated maple syrup. Four blend ratios have been evaluated: 45:55, 50:50, 55:45, 60:40 (45 degrees Brix treated maple syrup to 55 degrees Brix maple syrup). The concentration to 82 degrees Brix was carried out under vacuum (0.8 bar) and at a lower temperature (60 degrees Celsius). The resultant flavor profile was much improved over product produced in examples 3 and 4. Also, a shelf-life of more than 8 months is attainable with the 55:45 enzyme treated to pure maple syrup blend. Other blend ratios may be possible, for example 20 percent, but this would result in a shelf life of only about three weeks. For extended shelf life, a pure (100 percent) treated syrup could be concentrated as in Example 4, but the flavor and texture would be less desirable.

### Example 6: Shelf Life of Maple-based product at 75, 80, 83 and 87 Degrees Brix

Using a blend of 55:45 enzyme treated to non-enzyme treated syrup, further shelf life evaluations were carried out; evaluating the influence of maple syrup concentration. A blend of 55:45 enzyme treated to non enzyme treated syrup was concentrated using an experimental continuous evaporation system. The system was set-up to concentrate the product to 87 degrees Brix. A portion of this product was then diluted using deionized water to 75, 80 and 83 degrees Brix. Resultant samples were stored in the dark at room temperature (20-25 degrees Celsius). Shelf life studies of the four samples (75, 80, 83, 87 degrees Brix) show no visual signs of crystallization.

### Example 7: Viscosity

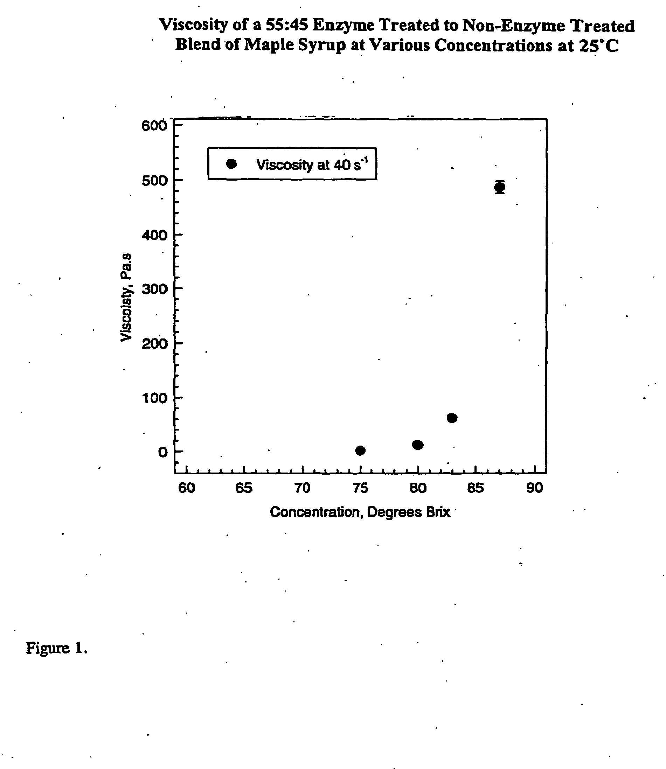

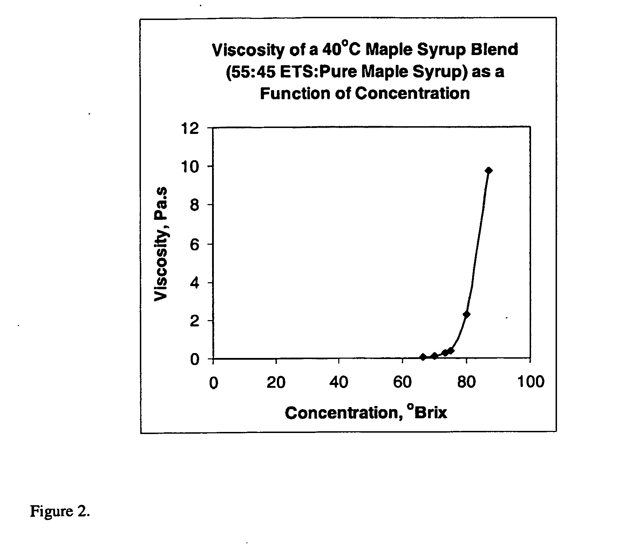

The viscosity of the maple syrup was determined at various concentrations. A 55:45 enzyme treated to non enzyme treated syrup blend was concentrated to 87 degrees Brix using an experimental continuous evaporation system. A sample of this product was then diluted to 75, 80 and 83 degrees Brix. The viscosity of the maple syrup was measured at each of the seven concentrations (66.5, 70, 73.5, 75, 80, 83, 87 degrees Brix) on a Carri-Med CLS² 500 Rheometer (TA instruments, New Castle, DE). A shear rate sweep (0 to 643 reciprocal seconds) was performed on each of the samples using a 2 cm, 4 degree cone and plate geometry. Temperature of the sample was controlled to 25 and 40 degrees Celsius. Because of the high viscosity of the samples, all samples were pre-warmed to 80 degrees Celsius prior to testing. Samples were then placed onto the testing apparatus and allowed to cool to the test temperature. The average viscosity of three runs is presented in Table 1 and shown in Figure 1. The average viscosity at 40°C is presented in Table 2 and shown in Figure 2.

**Table 1 Viscosity of Maple Syrup at Various Concentrations determined at 40 Reciprocal Seconds at 25°C.**

| Concentration | Viscosity, Pa.s |
|---|---|
| 75 | 1.48 |
| 80 | 11.8 |
| 83 | 61.5 |
| 87 | 487 |

**Table 2 Viscosity of a 40°C Maple Syrup Blend (55:45 ETS:Pure Maple Syrup) as a Function of Concentration**

| Concentration | Viscosity (Pa · s) |
|---|---|
| 66.5 | 0.05868 |
| 70 | 0.1145 |
| 73.5 | 0.262 |
| 75 | 0.3799 |
| 80 | 2.266 |
| 87 | 9.754 |

### Example 8: Blend methods of manufacture of the shelf stable, thick, pourable maple syrup product with a viscosity of common table syrup.

The method is based on the creation of the proper sugar ratio within the final product.

A known amount of maple syrup at 66 degrees Brix was blended with previously concentrated enzyme treated maple syrup such that both the final concentration and the proportions of each of the sugars present was corrected to yield a stable product. To obtain a 40:60 sugar ratio, the enzyme treated maple syrup was concentrated to between about 84 to 89 degrees Brix, preferably to about 87 degrees Brix to get a final Brix of about 72 to 76 degrees Brix, preferably about 73 degrees Brix, once blended with the pure maple syrup at 66 degrees Brix.

### Example 9: Partial treat then concentrate method of manufacture of the shelf stable, thick, pourable maple syrup with a viscosity of common table syrup.

The method is based on the creation of the proper sugar ratio within the final product.

Another way to obtain specific sugar ratio in the maple syrup is to control the conversion of sucrose to glucose and fructose. Sucrose is converted to glucose and fructose by the use of the enzyme invertase. As the reaction progresses, the amount of sucrose in the vessel decreases directly in proportion to the increase in the amount of glucose and fructose. Therefore, the reaction can be stopped at any desired sucrose:glucose and fructose ratio. Termination of the reaction is achieved by the inactivation or removal of the enzyme. In this application, this is accomplished by heat treatment of the treated syrup or by filtration. Once the reaction is terminated, the syrup is concentrated by accepted methods to the desired final concentration, which corresponds to the viscosity of common table syrups.

### Example 10. Blend maple syrup and unconcentrated ETS (enzyme treated syrup) followed by concentration method of manufacture of the shelf stable, thick, pourable maple syrup product with a viscosity of common table syrup

The following method of manufacture of a shelf stable, thick, pourable maple syrup has been devised. The method is based on the creation of the proper sugar ratio within the final product.

Another method of obtaining a shelf stable, thick, pourable maple syrup is to blend pure maple syrup with enzyme treated maple syrup in the appropriate proportions such that the final product has the correct sugar ratio followed by concentrating the whole blend to the desired final concentration using applicable evaporation technologies. The preferred sugar ratio would be 30:70 or 40:60 ETS:untreated maple syrup.

### Experiment 11: Viscosity of Common Table Syrups and Concentrated Maple Syrup

The viscosity of various table syrups was determined using a Brockfield Model HAT Viscometer at 22°C. The viscosity was measured at five rotational speeds (0.5, 1, 2.5, 5, 10, 20 50, and 100) with two different spindles attached (#3 and #4). The following results were obtained.

**Table 3: Apparent Viscosity of Common Table Syrups**

| Syrup | Apparent Viscosity*, Centipoise (Cp) |
|---|---|
| Aunt Jemima^{™} | 1500 |
| Log Cabin^{™} | 1800 |
| Mrs Butterworth's^{™} | 1900 |

| | |
|---|---|
| * Apparent Viscosity at 2.5 RPM, average between the two spindles | |

Sugar solutions have a specific viscosity at a given concentration. In order to make a shelf stable, thick, pourable maple syrup that has a viscosity of common table syrups, the viscosity of various maple sugar concentrations were measured. Maple syrup at 66 degrees Brix was blended with a high viscosity maple syrup (86 degrees Brix, 55:45 ETS:Pure blend) such that the resultant Brix of the sugar solution was 72, 74, 76, 78, and 80. The viscosity was then measured using the same protocol as for the table syrups. The following results were obtained.

**Table 4: Apparent Viscosity of Sugar Solutions at Various Concentrations**

| Sugar Solution Concentration, Degrees Brix | Apparent Viscosity*, Centipoise (Cp) |
|---|---|
| | |
| 72 | 1000 |
| 74 | 1500 |
| 76 | 3000 |
| 78 | 4800 |
| 80 | 12600 |

By comparing the viscosity data of Table 2 and Table 3, it was determined that in order to create a maple syrup that has a similar viscosity to that of common table syrup, the maple syrup blend needed to be concentrated to about 72 to 76 degrees Brix, preferably to about 72-74 degrees Brix.

### Experiment 12: Determination Sugar Blend Ratio Needed to Create a Shelf Stable, Pourable Thick Maple Syrup with a Viscosity of Common Table Syrup.

The stability of a thick maple syrup is dependent on the glucose, fructose and sucrose ratio. As previously described, concentrated sucrose solutions crystallizes much more readily in comparison to solutions of glucose, fructose or glucose and fructose mixtures at similar concentrations. Therefore, to obtain a product that has extended shelf-life, the proper blend of glucose, fructose and sucrose must be attained.

Five different blends of glucose and fructose (enzyme treated maple syrup) and sucrose (pure maple syrup) were made, corresponding to the following ratios: 10:90, 20:80, 30:70, 40:60 and 50:50 enzyme treated syrup:pure maple syrup. All samples were monitored on a regular basis, making observations on the appearance of any crystals. Crystals were observed in the 10:90 and 20:80 samples after five days. At 6 months no crystals were observed in the other three samples.

### Example 13: Maple Butter Containing Stabilizers

To test the efficacy of two stabilizers, a small-scale scraped surface heat exchanger (Sweden, Soft Serve Ice Cream Maker) was used to cool concentrated maple syrup solutions (86 degrees Brix) under high amounts of agitation. The following stabilizer levels of each stabilizer were evaluated: carageenan 0.05, 0.1 and 0.5 percent; xanthan 0.05, 0.1 and 0.33 percent. The stabilizer was first dispersed in a small quantity of water which was then blended with the unconcentrated maple syrup. Concentration to 86 degrees Brix was carried out in an open vat heated by steam. The hot concentrated product was then transferred into sealed containers that were subsequently cooled quiescently to 4 degrees Celsius. The cooled product was then poured into the scraped surface heat exchanger and agitated for 6 minutes. Product was drawn off the machine into 500 mL clear plastic containers. Samples from each stabilizer type and from each stabilizer concentration were monitored for stability as a function of time. All samples performed well, with limited amounts of separation being observed. The samples containing 0.1 percent carageenan did not show any signs of separation for 14 months. Similarly, the samples containing 0.1 percent xanthan also showed no signs of separation at 14 months.

### Example 14: Stabilization of Maple-based products Using Enzyme treated Maple Syrup

Enzyme treated maple syrup was produced by enzyme-treating maple syrup in the manner described in Example 3. This enzyme treated maple syrup was added to untreated maple syrup to produce maple butter. Various blends of ratios of maple syrup with enzyme treated maple syrup were evaluated to test the stabilization effect of enzyme treated maple syrup to maple butter. The two blend ratios used in this experiment were 20% enzyme treated maple syrup to 80% maple syrup, and 25% enzyme treated maple syrup to 75% maple syrup. The resultant blends were concentrated to 86 degrees Brix and cooled rapidly under high agitation. A very smooth creamy maple butter product was obtained in both 20 and 25 percent enzyme treated maple syrup to maple syrup blends. Both products did not shown any signs of separation for 12 months.

### Example 15: Maple Butter with Air or Inert Gas and Enzyme Treated Maple Syrup

A sensory evaluation of maple butter made in example 9 indicated that the sugar intensity could be considered too strong for some people. Also, the product was somewhat difficult to spread. To increase product spreadability and to create a more appealing flavor profile, maple butter was made by concentrating to only 84 degrees Brix and whipping air into the product while cooling. To aid in the retention of the air and with the spreadability, 0.01 percent xanthan was also added to the blend before concentration. Five different amounts of air were incorporated into the maple butter after crystallizing (rapid cooling with agitation), corresponding to 9, 15, 26, 35 and 37 percent over-run in the sample.

Stability of products varied with the amount of air incorporated into the product. Air bubble destabilization (bubble growth) was visible after about 1 week of storage at room temperature for samples containing more than 15 percent air. Samples containing more than 15 percent air also exhibited phase separation after approximately 3 weeks of storage at room temperature.

Maple syrup product, containing 25 percent enzyme treated maple syrup, 75 percent maple syrup and 0.01 percent xanthan was concentrated to 85 degrees Brix. When 12 percent air was added in the rapid cooling and agitation process, air bubble destabilization was minimal, and phase separation was not detected, after 1 month of storage at room temperature. Optionally, inert gas, for example nitrogen, may be used.

## Claims

1. A method of producing an enzyme treated maple syrup, comprising:
(a) adding a sucrose-cleaving enzyme to a maple syrup; and
(b) incubating the maple syrup to produce the enzyme treated maple syrup.

2. The method of claim 1 which further comprises the step of concentrating the enzyme treated maple syrup.

3. The method of claim 1 further comprising:
c) adding an untreated maple syrup to the enzyme treated maple syrup at a predetermined ratio of enzyme treated maple syrup to untreated maple syrup, to produce a maple syrup blend of untreated maple syrup and enzyme treated maple syrup; and
d) concentrating the maple syrup blend to produce an enzyme treated maple syrup product.

4. The method of claim 1 further comprising:
c) concentrating the enzyme treated maple syrup; and
d) adding an untreated maple syrup to the enzyme treated maple syrup at a predetermined ratio of enzyme treated maple syrup to untreated maple syrup, to produce a maple syrup blend of untreated maple syrup and enzyme treated maple syrup.

5. The method of any one of claims 1 or 2 which further comprises the step of removing or inactivating the sucrose-cleaving enzyme.

6. The method of claim 1 further comprising:
(c) inactivating or removing the sucrose cleaving enzyme; and
(d) concentrating the enzyme treated maple syrup to produce a shelf stable maple butter.

7. The method of any of claims 1 to 6 wherein the sucrose-cleaving enzyme is invertase.

8. The method of any of claims 1 to 7 wherein the maple syrup is diluted to 55 to 66 degrees Brix prior to the step of adding a sucrose- cleaving enzyme.

9. The method of claim 5 or 6, wherein the sucrose-cleaving enzyme is removed by filtration.

10. The method of claim 5 or 6, wherein the sucrose-cleaving enzyme is inactivated by heat treatment.

11. The method of claim 5 or 6 which comprises the additional step of monitoring the ratio of sucrose to fructose and glucose, and removing or inactivating the sucrose cleaving enzyme at a predetermined sucrose to fructose and glucose ratio, followed by the step of concentrating.

12. The method of any of claims 1 to 5 wherein the viscosity of the maple syrup product is between 1200 and 2100 centipoise at 2.5 rpm as determined by a Brockfield Viscometer at 22°C.

13. The method of claim 12 wherein the viscosity of the maple syrup is between 1300 and 1900 centipoise at 2.5 rpm as determined by a Brockfield Viscometer at 22°C

14. The method of claim 3 or 4 wherein the ratio of enzyme treated maple syrup to untreated maple syrup is from 30:70 to 60:40 by percentage of sugars present.

15. The method of claim 14 where the ratio of enzyme-treated maple syrup to untreated maple syrup is about 40:60 by percentage of sugars present.

16. The method of claim 4 wherein the enzyme-treated maple syrup is between 84 and 89 degrees Brix, and the maple syrup product has a final concentration of between about 72 and 76 degrees Brix.

17. The method of claim 16 wherein the ratio of enzyme treated maple syrup to untreated maple syrup is about 40:60, and the enzyme treated maple syrup is concentrated to between 84 to 89 degrees Brix, and the product has a final concentration of between 72 and 76 degrees Brix.

18. The method of any of claims 1 to 5, wherein the maple syrup product is concentrated to between 72 and 76 degrees Brix.

19. The method of any of claims 1 to 5, wherein the maple syrup product is concentrated to between 72 and 74 degrees Brix.

20. The method of claim 19, wherein the maple syrup product is concentrated by a method selected from the group consisting of flash evaporation and under vacuum using low heat of less than 65 degrees Celsius.

21. The method according to claim 4, wherein the maple syrup product is a shelf-stable, thick pourable, pure maple syrup with the viscosity of common table syrup, and the method according to claim 3, wherein the maple syrup product is a shelf-stable, thick spreadable, maple syrup with the consistency of clear honey.

22. A shelf stable maple syrup product obtainable by the methods according to claim 3 or 4 wherein the maple syrup product is a shelf-stable, thick pourable, pure maple syrup with the viscosity of common table syrup, or obtainable by the method of claim 3 wherein the maple syrup product is a shelf-stable, thick spreadable, maple syrup with the consistency of clear honey.

23. A shelf stable, thick, pourable, pure maple syrup product produced by the method according to any one of claims 1 to 5, having a Brix measurement of between 70 and 76 degrees and a viscosity of between 1200 and 2100 centipoise at 2.5 rpm as determined by a Brockfield Viscometer at 22°C.

24. A shelf stable, thick, pourable, pure maple syrup product of claim 23, having a Brix measurement of between 72 and 74 degrees and a viscosity of between 1300 and 1900 centipoise at 2.5 rpm as determined by a Brockfield Viscometer at 22°C.

25. Use of the maple syrup product according to any one of claims 22 to 24 as a topping, spread, snack food, sweetener or ingredient in a food.

26. A method of producing a shelf stable maple butter with the consistency of churned honey, comprising:
a) combining a maple syrup with an sucrose-cleaving enzyme treated maple syrup, one or more stabilizers, or a combination of both to form a maple syrup solution; and
b) concentrating the maple syrup solution to form shelf stable maple butter.

27. The method of claim 26 wherein the enzyme treated maple syrup is made according to the method of claim 1.

28. The method of claim 26 wherein the stabilizer is a viscosity altering hydrocolloid substance.

29. The method of claim 26 wherein the stabilizer is selected from the group consisting of xanthan and carageenan.

30. The method of claim 26 wherein the concentration of stabilizer is between 0.01 and 1 percent.

31. The method of claim 26 wherein the concentration of stabilizer is 0.1 percent.

32. The method of claim 27 wherein the ratio of enzyme treated maple syrup to maple syrup is from 20:80 to 25:75 by percentage of sugars present.

33. The method of claim 26 wherein the maple butter is concentrated to between 83 degrees Brix and 87 degrees Brix.

34. A maple butter obtainable by the method of claim 6.

35. Use of an enzyme treated maple syrup product obtainable by any one of claims 1 to 5 for preventing the crystallization and separation of another maple based product by addition of said enzyme treated maple syrup product.

36. A blended product comprising an enzyme treated maple syrup product obtainable by any one of claims 1 to 5 and a second product.

37. A blended product according to claim 36 wherein the second product is a maple based product.

38. A method of stabilizing a maple-based product, comprising:
a) combining a maple syrup with an enzyme treated maple syrup obtainable by any one of claims 1 to 5, one or more stabilizers, or a combination of both to form a maple syrup solution; and
b) adding the maple syrup solution to another product.

39. The method of claim 38 which further comprises the step of concentrating the maple syrup solution.

40. The method of claim 38 wherein the stabilizer is a viscosity altering hydrocolloid substance.

41. The method of claim 39 further comprising the addition of air or an inert gas after concentrating the solution.

## Patentansprüche

1. Ein Verfahren zur Erzeugung eines enzymbehandelten Ahornsirups, umfassend:
(a) Hinzugeben eines Saccharose-spaltenden Enzyms zu einem Ahornsirup; und
(b) Inkubieren des Ahornsirups zur Erzeugung des enzymbehandelten Ahornsirups.

2. Das Verfahren nach Anspruch 1, welches ferner den Schritt des Aufkonzentrierens des enzymbehandelten Ahornsirups umfasst.

3. Das Verfahren nach Anspruch 1, ferner umfassend:
c) Hinzugeben eines unbehandelten Ahornsirups zu dem enzymbehandelten Ahornsirup in einem vorbestimmten Verhältnis des enzymbehandelten Ahornsirups zu dem unbehandelten Ahornsirup, um eine Ahornsirup-Mischung aus unbehandeltem Ahornsirup und enzymbehandelten Ahornsirup zu erzeugen; und
d) Aufkonzentrieren der Ahornsirup-Mischung zur Erzeugung eines enzymbehandelten Ahornsirup-Produkts.

4. Das Verfahren nach Anspruch 1, ferner umfassend:
c) Aufkonzentrieren des enzymbehandelten Ahornsirups; und
d) Hinzugeben eines unbehandelten Ahornsirups zu dem enzymbehandelten Ahornsirup mit einem vorbestimmten Verhältnis von enzymbehandeltem Ahornsirup zu unbehandeltem Ahornsirup, um eine Ahornsirup-Mischung aus unbehandeltem Ahornsirup und enzymbehandelten Ahornsirup zu erzeugen.

5. Das Verfahren nach irgendeinem der Ansprüche 1 oder 2, welches ferner den Schritt der Entfernung oder Inaktivierung des Saccharose-spaltenden Enzyms umfasst.

6. Das Verfahren nach Anspruch 1, ferner umfassend:
(c) Inaktivieren oder Entfernen des Saccharose-spaltenden Enzyms; und
(d) Aufkonzentrieren des enzymbehandelten Ahornsirups zur Erzeugung einer haltbaren Ahornbutter.

7. Das Verfahren nach irgendeinem der Ansprüche 1 bis 6, wobei das Saccharose-spaltende Enzym Invertase ist.

8. Das Verfahren nach irgendeinem der Ansprüche 1 bis 7, wobei vor dem Schritt der Hinzugabe eines Saccharose-spaltenden Enzyms der Ahornsirup auf 55 bis 66 Grad Brix verdünnt wird.

9. Das Verfahren nach Anspruch 5 oder 6, wobei das Saccharose-spaltende Enzym mittels Filtration entfernt wird.

10. Das Verfahren nach Anspruch 5 oder 6, wobei das Saccharose-spaltende Enzym durch eine Wärmebehandlung inaktiviert wird.

11. Das Verfahren nach Anspruch 5 oder 6, welches den zusätzlichen Schritt der Überwachung des Verhältnisses von Saccharose zu Fructose und Glucose und die Entfernung oder Inaktivierung des Saccharose-spaltenden Enzyms bei einem vorbestimmten Verhältnis von Saccharose zu Fructose und Glucose, gefolgt von dem Schritt der Aufkonzentrierung, umfasst.

12. Das Verfahren nach irgendeinem der Ansprüche 1 bis 5, wobei die Viskosität des Ahornsirup-Produkts zwischen 1200 und 2100 Centipoise bei 2,5 U/min ist, bestimmt mittels eines Brookfield-Viskosimeters bei 22 °C.

13. Das Verfahren nach Anspruch 12, wobei die Viskosität des Ahornsirups zwischen 1300 und 1900 Centipoise bei 2,5 U/min ist, bestimmt mittels eines Brookfield-Viskosimeters bei 22 °C.

14. Das Verfahren nach Anspruch 3 oder 4, wobei das Verhältnis des enzymbehandelten Ahornsirups zu dem unbehandelten Ahornsirup von 30 : 70 bis 60 : 40, basierend auf dem Prozentsatz an vorhandenen Zuckern, ist.

15. Das Verfahren nach Anspruch 14, in dem das Verhältnis von enzymbehandeltem Ahornsirup zu unbehandeltem Ahornsirup ungefähr 40 : 60, basierend auf dem Prozentsatz an vorhandenen Zuckern, ist.

16. Das Verfahren nach Anspruch 4, wobei der enzymbehandelte Ahornsirup zwischen 84 und 89 Grad Brix hat, und das Ahornsirup-Produkt eine Endkonzentration zwischen ungefähr 72 und 76 Grad Brix aufweist.

17. Das Verfahren nach Anspruch 16, wobei das Verhältnis von enzymbehandeltem Ahornsirup zu unbehandeltem Ahornsirup ungefähr 40 : 60 ist, und der enzymbehandelte Ahornsirup auf zwischen 84 bis 89 Grad Brix aufkonzentriert wird, und das Produkt eine Endkonzentration zwischen 72 und 76 Grad Brix aufweist.

18. Das Verfahren nach irgendeinem der Ansprüche 1 bis 5, wobei das Ahornsirup-Produkt auf zwischen 72 und 76 Grad Brix aufkonzentriert wird.

19. Das Verfahren nach irgendeinem der Ansprüche 1 bis 5, wobei das Ahornsirup-Produkt auf zwischen 72 und 74 Grad Brix aufkonzentriert wird.

20. Das Verfahren nach Anspruch 19, wobei das Ahornsirup-Produkt mittels eines Verfahrens aufkonzentriert wird, das aus der aus einer Flash-Verdampfung und unter Vakuum unter Verwendung einer geringen Erwärmung von weniger als 65 Grad Celsius ausgewählt ist.

21. Das Verfahren nach Anspruch 4, bei dem das Ahornsirup-Produkt ein haltbarer, zähfließender, reiner Ahornsirup mit einer Viskosität von herkömmlichem Tafelsirup ist, und das Verfahren nach Anspruch 3, wobei das Ahornsirup-Produkt ein haltbarer, dick streichbarer Ahornsirup mit der Konsistenz von klarem Honig ist.

22. Haltbares Ahornsirup-Produkt, erhältlich durch die Verfahren nach Anspruch 3 oder 4, wobei das Ahornsirup-Produkt ein haltbarer, zähflüssiger, reiner Ahornsirup mit der Viskosität von herkömmlichem Tafelsirup ist, oder erhältlich durch das Verfahren nach Anspruch 3, wobei das Ahornsirup-Produkt ein haltbarer, dick streichbarer Ahornsirup mit der Konsistenz von klarem Honig ist.

23. Ein haltbares, zähes bzw. dickes, gießbares, reines Ahornsirup-Produkt, erzeugt durch das Verfahren gemäß irgendeinem der Ansprüche 1 bis 5, welches eine Brix-Messung zwischen 70 und 76 Grad, und eine Viskosität zwischen 1200 und 2100 Centipoise bei 2,5 U/min, bestimmt mittels eines Brookfield-Viskosimeters bei 22 °C, aufweist.

24. Ein haltbares, zähes bzw. dickes, gießbares, reines Ahornsirup-Produkt nach Anspruch 23, welches eine Brix-Messung zwischen 72 und 74 Grad und eine Viskosität zwischen 1300 und 1900 Centipoise bei 2,5 U/Min, bestimmt mittels eines Brookfield-Viskosimeters bei 22 °C, aufweist.

25. Verwendung des Ahornsirup-Produkts gemäß irgendeinem der Ansprüche 22 bis 24 als Garnierung, Aufstrich, Snackfood bzw. Zwischenmahlzeit, Süßungsmittel oder Nahrungsmittelzusatz.

26. Ein Verfahren zur Erzeugung einer haltbaren Ahornbutter mit der Konsistenz von gebuttertem Honig, umfassend:
a) Vereinigen eines Ahornsirups mit einem mit einem Saccharose-spaltenden Enzym behandelten Ahornsirup, einem oder mehreren Stabilisatoren, oder einer Kombination von beiden, um eine Ahornsirup-Lösung zu erzeugen; und
b) Aufkonzentrieren der Ahornsirup-Lösung zur Erzeugung einer haltbaren Ahornbutter.

27. Das Verfahren nach Anspruch 26, wobei der enzymbehandelte Ahornsirup gemäß dem Verfahren nach Anspruch 1 hergestellt worden ist.

28. Das Verfahren nach Anspruch 26, wobei der Stabilisator eine die Viskosität verändernde hydrokolloide Substanz ist.

29. Das Verfahren nach Anspruch 26, wobei der Stabilisator aus der Gruppe ausgewählt ist, bestehend aus Xanthan und Carrageenan.

30. Das Verfahren nach Anspruch 26, wobei die Konzentration des Stabilisators zwischen 0,01 und 1 Prozent liegt.

31. Das Verfahren nach Anspruch 26, wobei die Konzentration des Stabilisators 0,1 Prozent ist.

32. Das Verfahren nach Anspruch 27, wobei das Verhältnis von enzymbehandeltem Ahornsirup zu Ahornsirup von 20 : 80 bis 25 : 75, basierend auf dem Prozentsatz an vorhandenen Zuckern, ist.

33. Das Verfahren nach Anspruch 26, wobei die Ahornbutter auf zwischen 83 Grad Brix und 87 Grad Brix aufkonzentriert wird.

34. Ahornbutter, erhältlich durch das Verfahren nach Anspruch 6.

35. Verwendung eines enzymbehandelten Ahornsirup-Produkts, erhältlich durch irgendeinen der Ansprüche 1 bis 5, zur Verhinderung der Kristallisation und Abtrennung bzw. Absetzung irgendeines weiteren ahornbasierten Produkts durch Zugabe des enzymbehandelten Ahornsirup-Produkts.

36. Mischprodukt, umfassend ein enzymbehandeltes Ahornsirup-Produkt, erhältlich durch irgendeinen der Ansprüche 1 bis 5, und ein zweites Produkt.

37. Mischprodukt nach Anspruch 36, wobei das zweite Produkt ein Produkt auf Ahornbasis ist.

38. Ein Verfahren zur Stabilisierung eines Produkts auf Ahornbasis, umfassend:
a) Vereinigen eines Ahornsirups mit einem enzymbehandelten Ahornsirup, erhältlich durch irgendeinen der Ansprüche 1 bis 5, einem oder mehreren Stabilisatoren, oder eine Kombination von beiden, um eine Ahornsirup-Lösung zu erzeugen; und
b) Zugeben der Ahornsirup-Lösung zu einem weiteren Produkt.

39. Das Verfahren nach Anspruch 38, welches ferner den Schritt der Aufkonzentrierung der Ahornsirup-Lösung umfasst.

40. Das Verfahren nach Anspruch 38, wobei der Stabilisator eine die Viskosität verändernde hydrokolloide Substanz ist.

41. Das Verfahren nach Anspruch 39, welches ferner die Zugabe von Luft oder einem Inertgas nach Aufkonzentrierung der Lösung umfasst.

## Revendications

1. Procédé pour produire un sirop d'érable traité par une enzyme, comprenant :
(a) l'addition d'une enzyme coupant le saccharose à un sirop d'érable ; et
(b) l'incubation du sirop d'érable pour produire le sirop d'érable traité par une enzyme.

2. Procédé selon la revendication 1, qui comprend en outre l'étape de concentration du sirop d'érable traité par une enzyme.

3. Procédé selon la revendication 1, comprenant en outre :
(c) l'addition d'un sirop d'érable non traité au sirop d'érable traité par une enzyme avec un rapport prédéterminé du sirop d'érable traité par une enzyme au sirop d'érable non traité, pour produire un mélange de sirop d'érable constitué de sirop d'érable non traité et de sirop d'érable traité par une enzyme ; et
(d) la concentration du mélange de sirop d'érable pour produire un produit à base de sirop d'érable traité par une enzyme.

4. Procédé selon la revendication 1, comprenant en outre :
(c) la concentration du sirop d'érable traité par une enzyme ; et
(d) l'addition d'un sirop d'érable non traité au sirop d'érable traité par une enzyme avec un rapport prédéterminé du sirop d'érable traité par une enzyme au sirop d'érable non traité, pour produire un mélange de sirop d'érable constitué de sirop d'érable non traité et de sirop d'érable traité par une enzyme.

5. Procédé selon l'une quelconque des revendications 1 et 2, qui comprend en outre l'étape d'élimination ou d'inactivation de l'enzyme coupant le saccharose.

6. Procédé selon la revendication 1, comprenant en outre :
(c) l'inactivation ou l'élimination de l'enzyme coupant le saccharose ; et
(d) la concentration du sirop d'érable traité par une enzyme pour produire un beurre d'érable stable au stockage.

7. Procédé selon l'une quelconque des revendications 1 à 6, dans lequel l'enzyme coupant le saccharose est une invertase.

8. Procédé selon l'une quelconque des revendications 1 à 7, dans lequel le sirop d'érable est dilué à 55 à 66 degrés Brix avant l'étape d'addition d'une enzyme coupant le saccharose.

9. Procédé selon la revendication 5 ou 6, dans lequel l'enzyme coupant le saccharose est éliminée par filtration.

10. Procédé selon la revendication 5 ou 6, dans lequel l'enzyme coupant le saccharose est inactivée par traitement à la chaleur.

11. Procédé selon la revendication 5 ou 6, qui comprend l'étape additionnelle de surveillance du rapport du saccharose au fructose et au glucose, et d'élimination ou d'inactivation de l'enzyme coupant le saccharose à un rapport prédéterminé du saccharose au fructose et au glucose, suivie d'une étape de concentration.

12. Procédé selon l'une quelconque des revendications 1 à 5, dans lequel la viscosité du produit à base de sirop d'érable est comprise entre 1200 et 2100 centipoises à 2,5 t/min, telle que déterminée par un viscosimètre Brookfield à 22°C.

13. Procédé selon la revendication 12, dans lequel la viscosité du sirop d'érable est comprise entre 1300 et 1900 centipoises à 2,5 t/min, telle que déterminée par un viscosimètre Brookfield à 22°C.

14. Procédé selon la revendication 3 ou 4, dans lequel le rapport du sirop d'érable traité par une enzyme au sirop d'érable non traité est de 30/70 à 60/40 en pourcentage des sucres présents.

15. Procédé selon la revendication 14, dans lequel le rapport du sirop d'érable traité par une enzyme au sirop d'érable non traité est d'environ 40/60 en pourcentage des sucres présents.

16. Procédé selon la revendication 4, dans lequel le sirop d'érable traité par une enzyme fait entre 84 et 89 degrés Brix, et le produit à base de sirop d'érable a une concentration finale comprise entre environ 72 et 76 degrés Brix.

17. Procédé selon la revendication 16, dans lequel le rapport du sirop d'érable traité par une enzyme au sirop d'érable non traité est d'environ 40/60, et le sirop d'érable traité par une enzyme est concentré entre 84 et 89 degrés Brix, et le produit a une concentration finale comprise entre 72 et 76 degrés Brix.

18. Procédé selon l'une quelconque des revendications 1 à 5, dans lequel lé produit à base de sirop d'érable est concentré entre 72 et 76 degrés Brix.

19. Procédé selon l'une quelconque des revendications 1 à 5, dans lequel le produit à base de sirop d'érable est concentré entre 72 et 74 degrés Brix.

20. Procédé selon la revendication 19, dans lequel le produit à base de sirop d'érable est concentré par un procédé choisi dans le groupe constitué par une évaporation éclair et un vide utilisant une faible chaleur inférieure à 65 degrés Celsius.

21. Procédé selon la revendication 4, dans lequel le produit à base de sirop d'érable est un sirop d'érable pur stable au stockage, pouvant être versé à l'état épais, ayant la viscosité du sirop de table courant, et procédé selon la revendication 3, dans lequel le produit à base de sirop d'érable est un sirop d'érable stable au stockage, pouvant être tartiné à l'état épais, ayant la consistance d'un miel liquide.

22. Produit à base de sirop d'érable stable au stockage pouvant être obtenu par les procédés selon la revendication 3 ou 4, lequel produit à base de sirop d'érable est un sirop d'érable pur stable au stockage, pouvant être versé à l'état épais, ayant la viscosité du sirop de table courant, ou pouvant être obtenu par le procédé selon la revendication 3, lequel produit à base de sirop d'érable est un sirop d'érable stable au stockage, pouvant être tartiné à l'état épais, ayant la consistance d'un miel liquide.

23. Produit à base de sirop d'érable pur stable au stockage, épais, pouvant être versé, produit par le procédé selon l'une quelconque des revendications 1 à 5, ayant une mesure Brix comprise entre 70 et 76 degrés et une viscosité comprise entre 1200 et 2100 centipoises à 2,5 t/min, telle que déterminée par un viscosimètre Brookfield à 22°C.

24. Produit à base de sirop d'érable pur stable au stockage, épais, pouvant être versé, selon la revendication 23, ayant une mesure Brix comprise entre 72 et 74 degrés et une viscosité comprise entre 1300 et 1900 centipoises à 2,5 t/min, telle que déterminée par un viscosimètre Brookfield à 22°C.

25. Utilisation du produit à base de sirop d'érable selon l'une quelconque des revendications 22 à 24 en tant que garniture, produit à tartiner, produit à grignoter, édulcorant, ou ingrédient dans un aliment.

26. Procédé pour produire un beurre d'érable stable au stockage ayant la consistance d'un miel crémeux, comprenant :
(a) la combinaison d'un sirop d'érable avec un sirop d'érable traité par une enzyme coupant le saccharose, un ou plusieurs stabilisants, ou une combinaison des deux, pour former une solution de sirop d'érable ; et
(b) la concentration de la solution de sirop d'érable pour former un beurre d'érable stable au stockage.

27. Procédé selon la revendication 26, dans lequel le sirop d'érable traité par une enzyme est préparé conformément au procédé de la revendication 1.

28. Procédé selon la revendication 26, dans lequel le stabilisant est une substance hydrocolloïdale altérant la viscosité.

29. Procédé selon la revendication 26, dans lequel le stabilisant est choisi dans le groupe constitué par la xanthane et la carraghénane.

30. Procédé selon la revendication 26, dans lequel la concentration de stabilisant est comprise entre 0,01 et 1 pourcent.

31. Procédé selon la revendication 26, dans lequel la concentration de stabilisant est de 0,1 pourcent.

32. Procédé selon la revendication 27, dans lequel le rapport du sirop d'érable traité par une enzyme au sirop d'érable est de 20/80 à 25/75 en pourcentage des sucres présents.

33. Procédé selon la revendication 26, dans lequel le beurre d'érable est concentré entre 83 degrés Brix et 87 degrés Brix.

34. Beurre d'érable pouvant être obtenu par le procédé de la revendication 6.

35. Utilisation d'un produit à base de sirop d'érable traité par une enzyme pouvant être obtenu par l'une quelconque des revendications 1 à 5 pour empêcher la cristallisation et la séparation d'un autre produit à base d'érable par addition dudit produit à base de sirop d'érable traité par une enzyme.

36. Produit mélangé comprenant un produit à base de sirop d'érable traité par une enzyme pouvant être obtenu par l'une quelconque des revendications 1 à 5 et un deuxième produit.

37. Produit mélangé selon la revendication 36, dans lequel le deuxième produit est un produit à base d'érable.

38. Procédé pour stabiliser un produit à base d'érable, comprenant
(a) la combinaison d'un sirop d'érable avec un sirop d'érable traité par une enzyme pouvant être obtenu par l'une quelconque des revendications 1 à 5, un ou plusieurs stabilisants, ou une combinaison des deux, pour former une solution de sirop d'érable ; et
(b) l'addition de la solution de sirop d'érable à un autre produit.

39. Procédé selon la revendication 38, qui comprend en outre l'étape de concentration de la solution de sirop d'érable.

40. Procédé selon la revendication 38, dans lequel le stabilisant est une substance hydrocolloïdale altérant la viscosité.

41. Procédé selon la revendication 39, comprenant en outre l'addition d'air ou d'un gaz inerte après concentration de la solution.
